# EUROPÄISCHE PATENTSCHRIFT

(11) **EP 0 986 707 B1**
(45) Veröffentlichungstag und Bekanntmachung des Hinweises auf die Patenterteilung: **25.06.2003**
(21) Anmeldenummer: 98966493.3
(22) Anmeldetag: 24.11.1998
(51) Int. Cl.: F02M 25/08, F16K 3/18

(54) **Schieberventil**
Sliding valve
Soupape à coulisse

(30) Priorität: 10.03.1998 DE 19810212
(43) Veröffentlichungstag der Anmeldung: 22.03.2000
(73) Patentinhaber: ROBERT BOSCH GMBH, 70442 Stuttgart (DE)
(72) Erfinder: KRIMMER, Erwin, D-73655 Plüderhausen (DE); SCHULZ, Wolfgang, D-74321 Bietigheim-Bissingen (DE); MIEHLE, Tilman, D-71394 Kernen (DE)
(86) Internationale Anmeldenummer: DE9803459
(87) Internationale Veröffentlichungsnummer: WO99046500

(56) Entgegenhaltungen:
- EP-A- 0 361 183
- DE-A- 3 907 408
- DE-A- 19 540 021
- DE-U- 29 717 078
- US-A- 4 869 461
- US-A- 5 579 741

## Beschreibung

### Stand der Technik

Die Erfindung geht aus von einem Schieberventil, insbesondere zur Tankentlüftung in Kraftfahrzeugen, nach dem Oberbegriff von Anspruch 1.

Eine solche Ventileinrichtung dient der Regenerierung der Aktivkohle in dem Brennstoffverdunstungs-Rückhaltesystem für Brennstoffkreisläufe in Kraftfahrzeugen, wie sie beispielsweise in der Druckschrift Bosch - Technische Unterrichtung, Motormanagement Motronic, 2. Ausgabe, August 1993, auf den Seiten 48 und 49 beschrieben ist. Brennstoffrückhaltesysteme begrenzen die HC-Emissionen und sind mit einem Aktivkohlebehälter ausgerüstet, in dem eine Entlüftungsleitung aus dem Brennstoffbehälter endet. Die Aktivkohle hält den Brennstoffdampf zurück und läßt nur die Luft in die Umgebung entweichen, wodurch gleichzeitig für einen Druckausgleich gesorgt wird. Um die Aktivkohle immer wieder zu regenerieren, führt eine weitere Leitung vom Aktivkohlebehälter zu einem Ansaugrohr, in dem bei Motorbetrieb ein Unterdruck entsteht, der bewirkt, daß Luft aus der Umgebung durch die Aktivkohle in das Ansaugrohr strömt. Dabei werden die zwischengespeicherten Brennstoffdämpfe mitgerissen und der Verbrennung im Motor zugeführt. Der Regenerierstrom wird durch eine Ventileinrichtung der eingangs genannten Art in der Leitung zum Ansaugrohr dosiert.

Der Regenerierstrom ist ein Luft-Brennstoff-Gemisch, dessen Zusammensetzung aus mit Brennstoffdampf angereicherter Luft besteht. Wegen seiner nicht bzw. nur sehr aufwendig meßbaren Zusammensetzung stellt der Regenerierstrom für die Lambda-Regelung eine beachtliche Störung dar, da zudem die spezifische Dichte von Brennstoffdampf etwa doppelt so hoch ist wie die von Luft. Die Ventileinrichtung wird deshalb so angesteuert, daß der Aktivkohlebehälter ausreichend gespült wird und die Lambda-Abweichungen möglichst minimal sind.

Damit die Gemischadaption unabhängig von Tankentlüftungseinflüssen arbeiten kann, wird das Regenerierventil in regelmäßigen Zeitabständen geschlossen. Die Ventileinrichtung wird vorzugsweise rampenförmig geöffnet.

Der Aufbau einer solchen Ventileinrichtung zur Tankentlüftung ist zum Beispiel aus der DE 195 40 021 A1 bekannt. Die Ventileinrichtung besteht aus einem Ventilgehäuse, das einen Zuströmstutzen zum Anschließen an einen Entlüftungsstutzen des Brennstofftanks oder einem diesem nachgeschalteten Adsorptionsfilter bzw. Aktivkohlebehälter und einen Abströmstutzen zum Anschließen an das Ansaugrohr aufweist, einem im Inneren des Ventilgehäuses vorgesehenen, von einem Elektromagneten bewegbaren Anker, der im stromlosen Zustand des Elektromagneten von einer Ventilfeder an einen Dichtsitz angedrückt eine Strömungsverbindung vom Zuströmstutzen zum Abströmstutzen schließt und diese im bestromten Zustand des Elektromagneten öffnet. Um kleinste Brennstoffdampfmengen bei gleichzeitig einfachem Aufbau exakt zumessen zu können, ist zwischen dem Zuströmstutzen und dem Dichtsitz eine durch den Anker steuerbare Zumeßöffnung mit vorzugsweise V-förmiger Querschnittsfläche vorgesehen.

Eine weitere Ventileinrichtung der eingangs genannten Art ist in der DE 297 17 078 U1 offenbart. Bei diesem Tankentlüftungsventil ist der Anker mit einem Schließkörper verbunden, mittels dem eine freie Querschnittsfläche zwischen dem Zuströmstutzen und dem Abströmstutzen von einer Dichtstellung bis zu einer Maximalstellung stetig veränderbar ist. Der Schließkörper wird vorzugsweise aus einer Dichtscheibe mit einer Durchgangsöffnung gebildet, die auf einem Dichtsitz des Abströmstutzens aufliegt. Die Dichtscheibe wird über ein Federelement mit einem geringen Anpreßdruck an den Dichtsitz angedrückt, so daß die Dichtscheibe dichtend an diesem anliegt, jedoch beweglich gelagert bleibt. Das Federelement wird dabei durch Zapfen an der Dichtscheibe einerseits und an einem Sieb im Zuströmstutzen andererseits geführt. Bei dieser Ausführungsform muß das Federelement den Ventilhub mit durchlaufen, so daß es dabei durch die Verformung des Federelementes in einer Richtung radial zu seiner Längsachse ungewollte Querkräfte auf die Magnetankerlagerung und den Dichtsitz erzeugt. Außerdem kann dadurch die Dichtscheibe in ihrer vorgesehenen Halterung verkanten und es entstehen Dichtheitsprobleme am Dichtsitz dieses Tankentlüftungsventils.

### Vorteile der Erfindung

Das Schieberventil mit den Merkmalen des Anspruchs 1 hat demgegenüber den Vorteil, daß sich durch die Konstruktion des Federelementes mit einer Blattfeder, die sowohl mit dem Anker als auch mit dem Schließkörper fest verbunden ist, die gesamte Anordnung aus Schließkörper und Federelement mit dem Hub des Ankers mitbewegt. Hierdurch treten keine störenden Querkräfte an dem Federelement auf und gleichzeitig können Fertigungstoleranzen von Dichtsitz und Schließkörper ausgeglichen werden, so daß der Dichtsitz des Abströmstutzens besser und sicherer abgedichtet wird.

Die erfindungsgemäßen Schieberventile sind außerdern für Motoren mit Benzindirekteinspritzung geeignet, da problemlos auch große Spülmengen von Brennstoffdampf durch die Schieberventile geleitet werden können. Außerdem können die Schieberventile sowohl stetig als auch getaktet mit niedrigen und hohen Frequenzen betrieben werden.

Durch die in den Unteransprüchen aufgeführten Maßnahmen sind weitere vorteilhafte Weiterbildungen und Verbesserungen des in dem Anspruch 1 angegebenen Schieberventils möglich.

Es ist insbesondere von Vorteil, daß die Befestigungsvorrichtung des Schließkörpers am Anker in einer Gehäusenut im Ventilgehäuse geführt ist, um ein Verdrehen oder Verkanten des Ankers und der mit diesem verbundenen Bauteile und dadurch eine Undichtheit am Dichtsitz zu vermeiden.

### Zeichnung

Ausführungsbeispiele der Erfindung sind in der Zeichnung vereinfacht dargestellt und in der nachfolgenden Beschreibung näher erläutert. Es zeigen
- Fig. 1: einen Längsschnitt durch ein erstes Ausführungsbeispiel eines erfindungsgemäß ausgebildeten Schieberventils,
- Fig. 2: ein zweites Ausführungsbeispiel eines erfindungsgemäß ausgebildeten Schieberventils in vergrößerter Schnitt-Darstellung, und
- Fig. 3: einen Schließkörper des Schieberventils in Draufsicht.

### Beschreibung der Ausführungsbeispiele

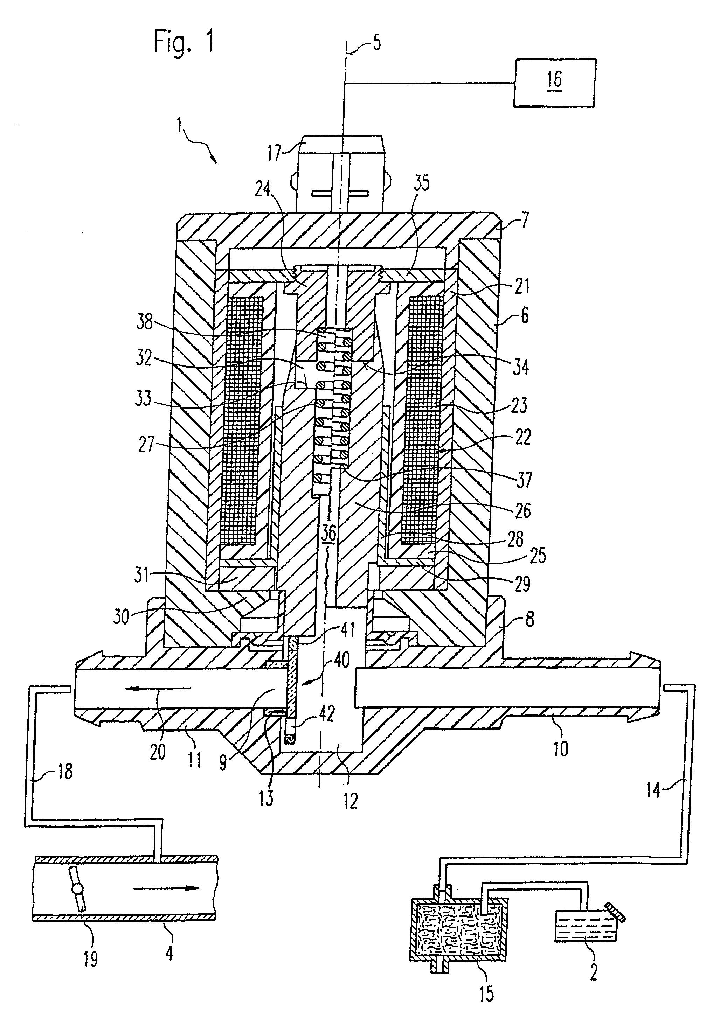

Das in Fig. 1 im Längsschnitt dargestellte Schieberventil 1 dient dem dosierten Einleiten von aus einem Brennstofftank 2 einer nicht näher dargestellten, insbesondere gemischverdichtenden, fremdgezündeten Brennkraftmaschine verflüchtigtem Brennstoffdampf in ein Ansaugrohr 4 der Brennkraftmaschine. Das Schieberventil 1 ist Teil eines eingangs beschriebenen Brennstoffverdunstungs-Rückhaltesystems.

Das Schieberventil 1 weist ein zum Beispiel aus drei Teilen bestehendes Ventilgehäuse auf, das sich aus einem zylindrischen Grundgehäuse 6, einem auf das Grundgehäuse 6 aufsetzbaren Gehäusedeckel 7 und einem unteren Gehäuseteil 8 zusammensetzt. Das zylindrische Grundgehäuse 6, der Gehäusedeckel 7 und das untere Gehäuseteil 8 sind vorzugsweise aus Kunststoff, zum Beispiel in Kunststoffspritztechnik, hergestellt.

Das untere Gehäuseteil 8 weist einen Zuströmstutzen 10 und einen Abströmstutzen 11 auf, die jeweils in einen Innenraum 12 des Schieberventils 1 münden, der somit eine Verbindung zwischen den beiden Stutzen 10 und 11 darstellt. Der Zuströmstutzen 10 dient dem Anschließen der des Schieberventils 1, beispielsweise über eine erste Schlauchleitung 14, an einen mit dem Brennstofftank 2 verbundenen Adsorptionsfilter 15. Der Adsorptionsfilter 15 ist mit einem Speichermedium für Brennstoffdampf, insbesondere mit Aktivkohle, gefüllt und dient der Zwischenspeicherung von aus dem Brennstofftank 2 verflüchtigtem Brennstoffdampf. Der Abströmstutzen 11 ergtreckt sich beispielsweise wie der Zuströmstutzen 10 quer zu der Längsachse 5 des Schieberventils 1 und steht ebenfalls radial vom unteren Gehäuseteil 8 ab. Der Abströmstutzen 11 ist weiter für den Anschluß einer zweiten Schlauchleitung 18 vorgesehen, die zum Beispiel stromabwärts einer drehbar in dem Ansaugrohr 4 angeordneten Drosselklappe 19 in das Ansaugrohr 4 mündet. Der Zuströmstutzen 10 kann auch parallel oder in Verlängerung der Längsachse 5 des Schieberventils 1 nach unten von dem unteren Gehäuseteil 8 abstehen, so daß Zuströmstutzen 10 und Abströmstutzen 11 in einem Winkel von etwa 90° zueinander angeordnet sind.

Im Inneren des Grundgehäuses 6 ist in einem Magnetgehäuse 21 ein Elektromagnet 22 untergebracht, der eine zylindrische Erregerspule 23 und einen Magnetkern 24 besitzt. Das Magnetgehäuse 21 ist hülsenförmig ausgebildet und trägt in seinem Inneren die Erregerspule 23, die auf einem zum Beispiel aus Kunststoff bestehenden Spulenträger 25 aufgewickelt ist. Die Erregerspule 23 umgibt einen von magnetischen Kräften anziehbaren, vorzugsweise metallenen Anker 26 des Schieberventils 1, um diesen im bestromten Zustand der Erregerspule 23 gegen die Kraft einer Ventilfeder 27 in Richtung der Längsachse 5 des Schieberventils 1 zu bewegen. Der Anker 26 ist hierzu in einer im Grundgehäuse 6 angeordneten Führungshülse 28 axial verschiebbar gelagert. Der Spulenträger 25 ist mit radialem Abstand zu der Außenfläche der im Durchmesser kleineren Führungshülse 28 im Inneren des Grundgehäuses 6 angeordnet und erstreckt sich radial bis zu der Innenwandung des Magnetgehäuses 21. Der radiale Abstand des Spulenträgers 25 zur Außenfläche der Führungshülse 28 verhindert dabei ein Verklemmen des Ankers 26 aufgrund von möglichen Wärmeausdehnungen, insbesondere der Erregerspule 23 bei Betrieb des Schieberventils 1. Der Spulenträger 25 liegt axial an einem ringförmigen Ansatz 29 der Führungshülse 28 an. Der Ansatz 29 erstreckt sich ebenfalls bis zur Innenwandung des Magnetgehäuses 21. Zwischen dem Ansatz 29 der Führungshülse 28 und einem radial umlaufenden Steg 30 des Grundgehäuses 6 ist zum Beispiel noch eine Anlagescheibe 31 vorgesehen, die mit radialem Abstand zu der Außenfläche des Ankers 26 angeordnet ist.

Zur Begrenzung der maximalen Auslenkung des Ankers 26 weist dieser an seinem dem Gehäusedeckel 7 zugewandten Ende eine Ausnehmung 32 auf, die vorzugsweise zylindrisch ausgebildet ist und den hülsenförmig ausgebildeten Magnetkern 24 zumindest teilweise aufnimmt. Bei maximaler Auslenkung des Ankers 26 schlägt dieser in der Ausnehmung 32 mit seiner ringförmigen Stirnfläche 33 an einer Ringfläche 34 des Magnetkerns 24 an. Um eine variable Einstellung des maximalen Hubs des Ankers 26 zu ermöglichen, kann der Magnetkern 24 vorteilhafterweise axial verschiebbar ausgebildet sein. Der Magnetkern 24 besitzt hierzu zum Beispiel ein Außengewinde, das in ein Innengewinde in einem das hülsenförmige Magnetgehäuse 21 abdeckenden Magnetboden 35 eingreift, um den Magnetkern 24 durch Drehen bzw. Schrauben entsprechend axial zu verschieben, so daß ein variabel einstellbarer Ankeranschlag für den Anker 26 vorhanden ist.

Der Anker 26 ist hohlzylindrisch ausgebildet und besitzt eine mittige Durchgangsöffnung 36, die sich in axialer Richtung entlang der Längsachse 5 des Schieberventils 1 von der Ausnehmung 32 am oberen Ende des Ankers 26 bis zu seinem im unteren Gehäuseteil 8 gelegenen Ende erstreckt und in den Innenraum 12 einmündet. In der Durchgangsöffnung 36 ist ein die Durchgangsöffnung 36 radial vergrößernder, umlaufender Absatz 37 ausgebildet, um zwischen dem Absatz 37 und einer im hülsenförmigen Magnetkern 24 vorgesehenen Ausnehmung 38 die Ventilfeder 27 aufzunehmen. Die Ventilfeder 27 stützt sich dabei einerseits in der Ausnehmung 38 am Magnetkern 24 und andererseits an dem Absatz 37 in der Durchgangsöffnung 36 des Ankers 26 ab.

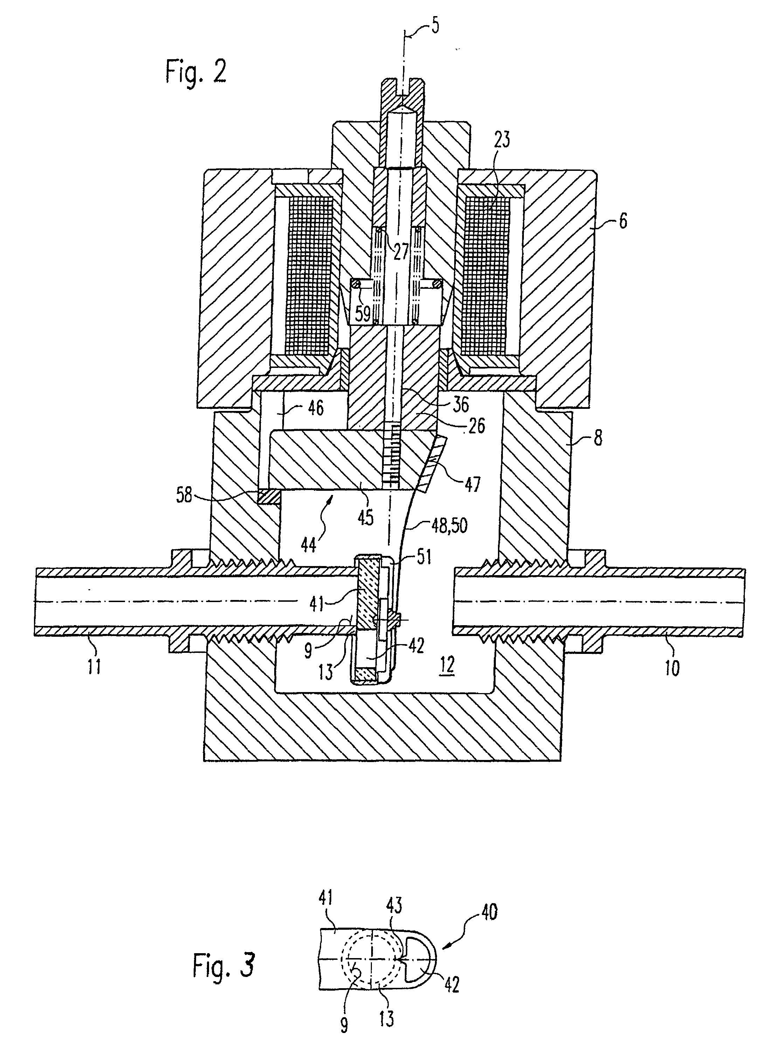

Mit dem unteren Ende des Ankers 26 ist ferner direkt oder mittels einer geeigneten Befestigungsvorrichtung 44 ein Schließkörper 40 verbunden, der in Fig. 1 nur schematisch dargestellt ist und anhand der Fig. 2 noch näher beschrieben wird. Der Schließkörper 40 wird im wesentlichen von einer Dichtscheibe 41 gebildet, die eine Zumeßöffnung 42 besitzt. Die Dichtscheibe 41 liegt auf einer ringförmigen Führungsfläche eines Dichtsitzes 13 auf, der am innenraumseitigen Ende des Abströmstutzens 11 angeordnet ist. Der Dichtsitz 13 bzw. zumindest dessen Führungsfläche und die Dichtscheibe 41 bestehen vorteilhafterweise aus einem Material mit geringem Reibwiderstand, beispielsweise aus einer Keramik. Zusätzlich ist ein dem Schließkörper 40 zugeordnetes, in Fig. 1 der besseren Übersichtlichkeit wegen nicht dargestelltes Federelement 50 vorgesehen, das den Schließkörper 40 mit geringer Federkraft gegen den Dichtsitz 13 preßt. Die Federkraft des Federelementes 50 ist dabei so gering gewählt, daß der Schließkörper 40 gegenüber dem Dichtsitz 13 in axialer Richtung des Schieberventils 1 verschiebbar ist. Für das Federelement 50 können dabei, wie in den Fig. 2 gezeigt, gemäß der Erfindung verschiedene Ausführungsformen vorgesehen sein.

Das in Fig. 1 gezeigte Schieberventil 1 übt folgende Funktion aus:
Im unbestromten Zustand der Erregerspule 23 wird der Anker 26 durch die Ventilfeder 27 in seiner Ruhestellung gehalten. Der Schließkörper 40 befindet sich in seiner Dichtstellung, in der die Dichtscheibe 41 die von dem Dichtsitz 13 gebildete Durchgangsöffnung 9 des Abströmstutzens 11 vollständig abdeckt. Die Zumeßöffnung 42 der Dichtscheibe 41 befindet sich außerhalb der Durchgangsöffnung 9 des Dichtsitzes 13, so daß eine Verbindung zwischen dem Innenraum 12 und dem Abströmstutzen 11 durch den Dichtsitz 13 und die Dichtscheibe 41 abgedichtet ist. In der in Fig. 3 gezeigten Draufsicht auf den Schließkörper 40 wird dies verdeutlicht, indem die Zumeßöffnung 42 der Dichtscheibe 41 neben der gestrichelt dargestellten Durchgangsöffnung 9 des Dichtsitzes 13 liegt.

Im bestromten Zustand der Erregerspule 23 wird der magnetische Anker 26 von den magnetischen Kräften der Erregerspule 23 zum Magnetkern 24 hin angezogen und nimmt jede axiale Zwischenstellung ein. In seiner Endstellung, gleichzeitig der maximalen Offenstellung des Schieberventils 1 bzw. des Schließkörpers 40 liegt, wie in der rechts der Längsachse 5 liegenden Hälfte des Schieberventils 1 in Fig. 1 dargestellt ist, die ringförmige Stirnfläche 33 der Ausnehmung 32 des Ankers 26 an der Ringfläche 34 des Magnetkerns 24 an. Über die Befestigungsvorrichtung 44 wird der Schließkörper 40 ebenfalls in Richtung der Erregerspule 23 bewegt. Hierdurch gelangt die Zumeßöffnung 42 der Dichtscheibe 41 in Überdeckung mit der Durchgangsöffnung 9 des Dichtsitzes 13, so daß sich ein Verbindungsweg zwischen den Anschlußstutzen 10 und 11 über den Innenraum 12 öffnet und Brennstoffdampf vom Zuströmstutzen 10 durch die Zumeßöffnung 42 hindurch in den Abströmstutzen 11 gelangen kann.

Je nach Hub des Ankers 26 bzw. des Schließkörpers 40 ändert sich der Überdeckungsgrad der Zumeßöffnung 42 der Dichtscheibe 41 und der Durchgangsöffnung 9 des Dichtsitzes 13. Der Hub des gegen die Ventilfeder 27 arbeitenden Ankers 26 wird dabei durch die Stärke des magnetischen Feldes des Elektromagneten 22 bestimmt. Zur Ansteuerung des Elektromagneten 22 ist ein elektronisches Steuergerät 16 vorgesehen, das über eine elektrische Leitung und über einen am Gehäusedeckel 7 vorzugsweise einstückig angeformten Steckeranschluß 17 mit dem Elektromagneten 22 elektrisch verbunden ist. Entsprechend der Größe des Steuerstromes und der sich damit einstellenden unterschiedlichen Größe des Magnetfeldes der Erregerspule 23 erfolgt eine proportionale Bewegung des Ankers 26.

Das elektronische Steuergerät 16 übermittelt dem Elektromagneten 22 eine Ansteuerimpulsfolge einer elektrischen Spannung vorzugsweise mit einer relativ hohen Frequenz von beispielsweise 100 Hz. Das in Fig. 1 gezeigte Schieberventil 1 kann aber ebenso bei Bedarf getaktet oder mit Ansteuerfrequenzen im Bereich von etwa 5 bis 150 Hz betrieben werden. Die Ansteuerimpulsfolge wird dabei vom elektronischen Steuergerät 16 mit einem vom Steuergerät veränderbaren Tastverhältnis abgegeben. Das Tastverhältnis gibt beispielsweise prozentual den Quotienten der Impulsdauer zum Impulsabstand der nacheinander folgenden Impulse an. Eine derartige Ansteuerung ist als sogenannte Pulsbreitenmodulation bekannt. Die Erregerspule 23 hat vorzugsweise eine Erregerwicklung, die einen nahezu gleichbleibenden Widerstandswert unabhängig von Temperatureinflüssen des Schieberventils 1 aufweist, wodurch es möglich ist, auf eine sogenannte stromgeregelte Endstufe bei der Ansteuerung zu verzichten.

Anhand der in Fig. 3 gezeigten Draufsicht des Schließkörpers 40 wird deutlich, daß die Zumeßöffnung 42 der Dichtscheibe 41 eine spezielle Kontur aufweist. Diese Kontur kann beispielsweise von einem Halbkreis, dessen Radius dem Radius der Durchgangsöffnung 9 entspricht, und von einem von diesem Halbkreis in Richtung des Dichtsitzes 13 entspringenden nasenförmigen Vorsprung 43 gebildet werden. Dieser Vorsprung 43 verläuft mit einer Konizität in Richtung des Dichtsitzes 13 spitz zulaufend. Hierdurch wird erreicht, daß bei nur geringfügigem Anziehen des Ankers 26 zunächst nur - gegebenenfalls auch nur teilweise - der Vorsprung 43 in Überdeckung mit der Durchgangsöffnung 9 gelangt. Auf diese Weise sind sehr exakte, insbesondere in sehr feinen Schritten erfolgende Dosiermöglichkeiten gegeben. Die Evakuierung des an dem Abströmstutzen 11 angeschlossenen Innenraumes 12 erfolgt entsprechend dem in dem Ansaugrohr 4 herrschenden Unterdruck. Die Erfindung ist aber selbstverständlich nicht auf die in Fig. 5 dargestellte Ausführungsform der Dichtscheibe 41 und insbesondere der Zumeßöffnung 42 beschränkt, es können vielmehr prinzipiell Schließkörper 40 mit beliebig geformten und aufgebauten Zumeßöffnungen 42 verwendet werden.

Die erfindungsgemäße Ausgestaltung der Befestigungsvorrichtung 44 des Schließkörpers 40 und des auf den Schließkörper 40 wirkenden Federelementes 50 wird nun im folgenden anhand des in der Fig. 2 dargestellten Ausführungsbeispieles näher beschrieben. In der Fig. 2 ist dabei die Anordnung des Schließkörpers 40 und des Federelementes 50 des Schieberventils 1 von Fig. 1 vergrößert dargestellt. Im Ausführungsbeispiel von Fig. 2 ist das Federelement 50 durch eine Blattfeder 48 realisiert.

In dem in Fig. 2 gezeigten Schieberventil 1 ist an dem der Ventilfeder 27 abgewandten Ende des Ankers 26 eine vorzugsweise einstückig angebrachte bzw. als Teil des Ankers 26 ausgebildete Befestigungsvorrichtung 44 vorgesehen, die sich im wesentlichen in radialer Richtung, d.h. parallel zum Abströmstutzen 11 erstreckt und bzgl. der Längsachse 5 des Schieberventils 1 asymmetrisch aufgebaut ist. An dem in Fig. 2 rechts liegenden Ende weist die Befestigungsvorrichtung 44 eine schräge Planfläche 47 auf, wobei die radiale Ausdehnung der Befestigungsvorrichtung 44 in axialer Richtung auf den Abströmstutzen 11 zu, d.h. in Fig. 2 nach unten, abnimmt. Die Befestigungsvorrichtung 44 ragt dabei am Ende der schrägen Planfläche 47 in radialer Richtung weiter in den Innenraum 12 hinein als der Abströmstutzen 11, so daß die Planfläche 47 in Richtung auf den Schließkörper 40 zu geneigt ist.

An dem der schrägen Planfläche 47 in radialer Richtung gegenüberliegenden Ende erstreckt sich die Befestigungsvorrichtung 44 radial bis zu der Innenwand des unteren Gehäuseteiles 8 und weist dort ein Führungselement 45 auf, welches in einer entsprechenden Gehäusenut 46 des unteren Gehäuseteiles 8 geführt wird. Das Führungselement 45 ist vorteilhafterweise als runder Bolzen oder kugelförmig ausgebildet. Durch diese Führung der Befestigungsvorrichtung 44 wird ein Verdrehen des Ankers 26 und der mit diesem verbundenen Federelement 50 und Schließkörper 40 wirksam verhindert, wodurch eine durch Verkanten der Bauteile auftretende Undichtheit des Schieberventils 1 am Dichtsitz 13 vermieden wird.

Der Schließkörper 40 ist an seiner dem Abströmstutzen 11 abgewandten Seitenfläche mit einem Aufsatz 51 versehen, der eine technisch einfache Befestigung einer Blattfeder 48 erlaubt. Die Ausrichtung des Aufsatzes 51 ist dabei parallel zu der Dichtscheibe 41 bzw. zu der Längsachse 5 des Schieberventils 1 angeordnet, so daß die Ebene der schrägen Planfläche 47 und die Ebene des Aufsatzes 51 nicht parallel verlaufen. Im einfachsten Fall ist die Blattfeder 48 mit dem Aufsatz 51 verschraubt oder vernietet. Die Blattfeder 48 erstreckt sich von dem Aufsatz 51 des Schließkörpers 40 bis zu der schrägen Planfläche 47 der Befestigungsvorrichtung 44 am Anker 26, an der die Blattfeder 48 ebenfalls durch Verschrauben, Vernieten oder dergleichen befestigt ist. Durch die schräge Planfläche 47 ist die Blattfeder 48 gegen die Dichtscheibe 41 des Schließkörpers 40 vorgespannt und drückt diese mit der erforderlichen Druckkraft gegen den Dichtsitz 13 des Abströmstutzens 11.

Die eingangs beschriebenen, bei dem vorbekannten Stand der Technik auftretenden Querkräfte am Federelement 50 können durch diese Konstruktion offensichtlich vermieden werden, da sich die gesamte Anordnung aus Schließkörper 40 und Federelement 50 mit dem Anker 26 mitbewegt. Durch die erfindungsgemäße Konstruktion des Federelementes 50 und dessen Verbindung mit dem Schließkörper 40 wird auf einfache Weise eine sichere Abdichtung des Dichtsitzes 13 erreicht, wobei auch Fertigungstoleranzen von Dichtsitz 13, Dichtscheibe 41 und Anker 26 ausgeglichen werden.

Zur akustischen Dämpfung des Schieberventils 1 sind die Endanschläge des Ankers 26 in der Gehäusenut 46 und an der Ringfläche 34 des Magnetkerns 24 mit entsprechenden dämpfenden Anschlägen 58 bzw. 59 versehen. Die Anschläge 58 und 59 sind beispielsweise aus einem elastischen Material, wie Gummi, gefertigt. Ferner ist es vorteilhaft, das Schieberventil 1 derart elektrisch anzusteuern, daß der Anker 26 während des Betriebes nie am Magnetkern 24 oder an der Hubbegrenzung der Gehäusenut 46 anschlägt.

Bei 10 Hz-Betrieb wird das Schieberventil 1 zum Beispiel mit einem Tastverhältnis von 50% betrieben. Bei Einschalten des Stromes der Erregerspule 23 für die Dauer von beispielsweise 50 ms wird der Anker 26 durch die Magnetkraft angezogen, erreicht aber aufgrund des großen Ventilhubes nicht den oberen Anschlag 59 an der Ringfläche 34 des Magnetkerns 24, da zwischenzeitlich der Strom in der Erregerspule 23 abgeschaltet wurde. Während der anschließenden 50 ms, in denen der Strom ausgeschaltet ist, bewegt sich der Anker 26 - ohne den oberen Anschlag 59 erreicht zu haben - durch die Federkraft der Ventilfeder 27 nach unten. Bei dieser Bewegung nach unten verhindern die verbleibende Energie in der Erregerspule 23, welche zum Beispiel über eine Z-Diode gesteuert werden kann, und der große Ventilhub des Ankers 26 ein Anschlagen des Ankers 26 in Schließstellung am Anschlag 58 in der Gehäusenut 46, da zwischenzeitlich die Erregerspule 23 wieder bestromt wurde. Der Anker 26 kann der elektrischen Ansteuerung zeitlich nicht folgen und pendelt somit zwischen den beiden Endstellungen ohne diese ganz zu erreichen. Auf diese Weise ergibt sich eine wellenförmige Zumessung des Regeneriergases, die eine deutliche Verbesserung der Gleichverteilung der Zumessung gegenüber Taktventilen ohne hochfrequente Ansteuerung ergibt.

Es bei an dieser Stelle nochmals darauf hingewiesen, daß das erfindungsgemäße Schieberventil 1 sowohl mit niederfrequenten als auch mit hochfrequenten Ansteuerungen (stetig oder getaktet) betrieben werden kann, und auch für den Einsatz in Motoren mit Benzindirekteinspritzung geeignet ist.

## Patentansprüche

1. Schieberventil (1), insbesondere zur Tankentlüftung in Kraftfahrzeugen, mit
einem Ventilgehäuse (6, 7, 8), das einen Zuströmstutzen (10) und einen Abströmstutzen (11) aufweist,
einem im Inneren des Ventilgehäuses (6, 7, 8) vorgesehenen, mittels eines Elektromagneten (22) bewegbaren Anker (26),
einem mit dem Anker (26) verbundenen Schließkörper (40), der im stromlosen Zustand des Elektromagneten (22) einen Dichtsitz (13) des Abströmstutzens (11) schließt und diesen im bestromten Zustand des Elektromagneten (22) öffnet, wobei die freie Querschnittsfläche zwischen dem Zuströmstutzen (10) und dem Abströmstutzen (11) stetig veränderbar ist, und
einem Federelement (50), das den Schließkörper (40) mit einem Anpreßdruck gegen den Dichtsitz (13) drückt,
**dadurch gekennzeichnet,**
**daß** das Federelement (50) eine Blattfeder (48) aufweist, die einerseits mit dem Anker (26) und andererseits mit dem Schließkörper (40) fest verbunden ist, wobei die Blattfeder (48) derart vorgespannt ist, daß sie den Schließkörper (40) gegen den Dichtsitz (13) preßt.

2. Schieberventil nach Anspruch 1,
**dadurch gekennzeichnet,**
**daß** der Anker (26) eine Planfläche (47) aufweist, deren Ebene schräg zu der Ebene des Dichtsitzes (13) bzw. des Schließkörpers (40) orientiert ist, und
**daß** die Blattfeder (48) an der schrägen Planfläche (47) des Ankers (26) befestigt ist.

3. Schieberventil nach Anspruch 1 oder 2,
**dadurch gekennzeichnet,**
**daß** die Blattfeder (48) mit dem Anker (26) und/oder dem Schließkörper (40) vernietet oder verschraubt ist.

4. Schieberventil nach einem der vorhergehenden Ansprüche,
**dadurch gekennzeichnet,**
**daß** der Anker (26) ein Führungselement (45) aufweist, das zur Sicherung des Ankers (26) gegen Verdrehen um die Längsachse (5) in einer Gehäusenut (46) geführt ist.

## Claims

1. Slide valve (1), in particular for tank venting in motor vehicles, with a valve housing (6, 7, 8) which has an inflow nipple (10) and an outflow nipple (11), with an armature (26) provided inside the valve housing (6, 7, 8) and moveable by means of an electromagnet (22), with a closing body (40) which is connected to the armature (26) and which, in the currentless state of the electromagnet (22), closes a sealing seat (13) of the outflow nipple (11) and, in the live state of the electromagnet (22), opens the said sealing seat, the free cross-sectional area between the inflow nipple (10) and the outflow nipple (11) being continuously variable, and with a spring element (50) which presses the closing body (40) against the sealing seat (13) with a pressure force, **characterized in that** the spring element (50) has a leaf spring (48) which is firmly connected to the armature (26), on the one hand, and to the closing body (40), on the other hand, the leaf spring (48) being prestressed in such a way that it presses the closing body (40) against the sealing seat (13).

2. Slide valve according to Claim 1, **characterized in that** the armature (26) has a planar surface (47), the plane of which is oriented obliquely to the plane of the sealing seat (13) or of the closing body (40), and **in that** the leaf spring (48) is fastened to the oblique planar surface (47) of the armature (26).

3. Slide valve according to Claim 1 or 2, **characterized in that** the leaf spring (48) is riveted or screwed to the armature (26) and/or to the closing body (40).

4. Slide valve according to one of the preceding claims, **characterized in that** the armature (26) has a guide element (45) which is guided in a housing groove (46) for the purpose of securing the armature (26) against rotation about the longitudinal axis (5).

## Revendications

1. Soupape à coulisse (1), notamment pour la ventilation du réservoir d'un véhicule automobile, comportant un boîtier de soupape (6, 7, 8) muni d'un ajutage d'alimentation (10) et d'un ajutage de sortie (11), un induit (26), logé dans le boîtier de soupape (6, 7, 8), déplacé par un électroaimant (22),
un organe d'obturation (40) relié à l'induit (26) et qui ferme un siège d'étanchéité (13) de l'ajutage de sortie (11) lorsque l'électroaimant (22) n'est pas alimenté, cet organe ouvrant le siège lorsque l'électroaimant (22) est alimenté, la surface libre de la section entre l'ajutage d'alimentation et l'ajutage de sortie (11) étant variable en continu, et un élément de ressort (50) qui pousse l'organe d'obturation (40) avec une pression d'application contre le siège d'étanchéité (13),
**caractérisée en ce que**
l'élément de ressort (50) comporte un ressort-lame (48) relié solidairement d'un côté à l'induit (26) et de l'autre à l'organe d'obturation (40), le ressort-lame (48) étant précontraint pour presser l'organe d'obturation (40) contre le siège d'étanchéité (13).

2. Soupape à coulisse selon la revendication 1,
**caractérisée en ce que**
l'induit (26) comporte une surface plane (47) dont le plan est incliné par rapport à celui du siège d'étanchéité (13) ou de l'organe d'obturation (40), et le ressort-lame (48) est fixé contre la surface plane inclinée (47) de l'induit (26).

3. Soupape à coulisse selon la revendication 1 ou 2,
**caractérisée en ce que**
le ressort-lame (48) est riveté ou vissé à l'induit (26) et/ou à l'organe d'obturation (40).

4. Soupape à coulisse selon l'une des revendications précédentes,
**caractérisée en ce que**
l'induit (26) comporte un élément de guidage (45) qui bloque l'induit (26) en rotation autour de l'axe longitudinal (5) venant dans une rainure (46) du boîtier.
